# EUROPÄISCHE PATENTANMELDUNG

(11) **EP 4 650 026 A1**
(43) Veröffentlichungstag der Anmeldung: **19.11.2025**
(21) Anmeldenummer: 24176083.4
(22) Anmeldetag: 15.05.2024
(51) Int. Cl.: B01D 25/12, B01D 25/164, B01D 25/21, B01D 25/30, B01D 37/04, B01D 25/00, G01N 21/53, B01D 35/143

(54) **FILTERPRESSE UND VERFAHREN ZUR UEBERWACHUNG DER FILTERPRESSE**

(71) Anmelder: Andritz AG, 8045 Graz (AT)
(72) Erfinder: CASTRO, Alberto, 40764 Langenfeld (DE); KIEDL, Matthias, 8583 Edelschrott (AT); KARNER, Magdalena, 8045 Graz (AT); KERN, Jürgen, 8181 St. Ruprecht (AT); PANHOLZER, Michael, 4100 Ottensheim (AT)
(74) Vertreter: Anzel, Andreas

(57) **Zusammenfassung**

Die Erfindung betrifft eine Filterpresse umfassend Filterplatten (1), wobei Filterkammern (3) zwischen benachbarten Filterplatten (1) ausgebildet sind und ein Filtrat aus der jeweiligen Filterkammer (3) - in welcher Filtermittel anordenbar sind - einer Abführleitung (5) zuführbar ist. Die Erfindung betrifft auch ein Verfahren zur Überwachung der Filterpresse. Die Erfindung ist dadurch gekennzeichnet, dass zumindest ein Trübungserfassungsmodul (7) zur Erfassung der Trübe des Filtrats in der Abführleitung (5) zwischen Einspeisepunkten (6) angeordnet ist. Die Erfindung erlaubt eine robuste und verlässliche Erfassung der Trübe des Filtrats bzw. des Zustands des Filtermittels.

## Beschreibung

Die Erfindung betrifft eine Filterpresse zur Trennung einer Fest-Flüssig Suspension, umfassend ein aus Filterplatten gebildetes Filterpaket, wobei das Filterpaket durch Stapelung der Filterplatten - unter Ausbildung von Filterkammern zwischen benachbarten Filterplatten - gebildet wird, den Filterkammern die Fest-Flüssig Suspension über eine Zuführleitung zuführbar ist, wobei in den jeweiligen Filterkammern Filtermittel zur Abtrennung eines Filtrats aus der Fest-Flüssig Suspension anordenbar sind, das Filtrat der jeweiligen Filterkammer einer Abführleitung an einem Einspeisepunkt zuführbar ist, der Abführleitung im Wesentlichen das Filtrat aller Filterkammern des gebildeten Filterpakets zuführbar ist, wobei die Abführleitung eine Vielzahl an Einspeisepunkten aufweist. Die Erfindung betrifft auch ein Verfahren zur Überwachung der Trennung einer Fest-Flüssig Suspension in einer erfindungsgemäßen Filterpresse.

Filterpressen erlauben die Trennung einer Fest-Flüssig Suspension und umfassen zumindest ein durch Filterplatten gebildetes Filterpaket, wobei Filterkammern zwischen benachbarten Filterplatten ausgebildet werden. Das Filterpaket ist typischerweise zwischen einem festen und einem beweglichen Deckel angeordnet. Zwischen den Filterplatten befinden sich Filtermittel, wobei die Trennung als Kuchenfiltration der Suspension mit Abscheidung des Feststoffes aus der Suspension auf dem Filtermittel erfolgt. Typischerweise kann auf das zwischen dem festen und dem beweglichen Deckel angeordnete Filterpaket über Anpressung des beweglichen Deckels Druck ausgeübt werden, wobei Anpressdrücke zwischen 250 und 600 bar gegeben sein können. Diese Anpressdrücke stellen eine ausreichende gegenseitige Anpressung der das Filterpaket bildenden Filterplatten sicher, wodurch die Dichtigkeit des Filterpakets gewährleistet wird. Zum Zuführen der Suspension ist die Zuführleitung typischerweise im festen Deckel integriert, wobei die Suspension den Filterkammern beispielsweise in der Mitte der Filterplatten zuführbar ist. Im Rahmen einer diskontinuierlichen Betriebsweise wird die Suspension den Filterkammern unter einem Druck von 10 bis 20 bar zugeführt und gegen das Filtermittel gepresst. Der Feststoff aus der Suspension wird am Filtermittel zurückgehalten und bildet den Filterkuchen, das Filtrat passiert das Filtermittel und verlässt die Filterkammer über Kanäle, wobei das Filtrat aus den Kanälen einer Abführleitung zugeführt wird. Die Abführleitung fungiert dabei als Sammler für das aus den Kanälen zuströmende Filtrat. Nach Abschluss der Trennung wird die Filterpresse geöffnet, die Filterplatten werden getrennt bzw. in einen Abstand zueinander gebracht, um den Filterkuchen entnehmen zu können.

Ein nicht ordnungsgemäßer Betrieb der Filterpresse ist bei Beschädigung des Filtermittels gegeben. So das Filtermittel beschädigt ist, z. B. durch einen Riss oder ein Loch, wird nur eine unzureichende Trennung erzielt, wodurch neben dem Filtrat auch Feststoffe das Filtermittel passieren. Dies äußert sich insbesondere in einer Trübung des Filtrats. Das Feststoff enthaltende Filtrat ist jedoch für nachfolgende Prozesse ungeeignet. Eine frühzeitige Erkennung einer unzureichenden Trennung ist daher wesentlich. In Anbetracht der Vielzahl an in Filterpressen angeordneten Filtermittel -jede Filterkammer umfasst in der Regel zwei Filtermittel - ist eine direkte Erkennung eines fehlerhaften Filtermittels wichtig um den manuellen Serviceaufwand möglichst gering zu halten.

Ziel der Erfindung ist eine Filterpresse, wobei eine fehlerhafte Trennung der Fest-Flüssig Suspension, d.h. eine unzureichende Abtrennung des Feststoffes in Folge eines beschädigten Filtermittels, verlässlich erkannt wird und die Fehlerquelle direkt identifizierbar ist.

Dies gelingt erfindungsgemäß dadurch, dass zumindest ein Trübungserfassungsmodul zur Erfassung der Trübe des Filtrats in der Abführleitung zwischen zwei Einspeisepunkten angeordnet ist. Erfindungsgemäß wird die Fest-Flüssig Suspension über die Zuführleitung den Filterkammern zugeführt. In den jeweiligen Filterkammern sind Filtermittel zur Abtrennung des Filtrats aus der Fest-Flüssig Suspension anordenbar. Im Wesentlichen sind die Filtermittel für den Feststoff der Fest-Flüssig Suspension nicht durchlässig. Bei Beschädigung des Filtermittels beispielsweise, kann jedoch auch ungetrennte Fest-Flüssig Suspension das Filtermittel passieren, wodurch das aus der Filterkammer abgeführte Filtrat zunehmend Feststoff enthalten kann, was generell zu einer zunehmenden Trübung des Filtrats führt. Das Filtrat der jeweiligen Filterkammer ist dabei an einem Einspeisepunkt der Abführleitung zuführbar. Typischerweise ist das Filtrat aus der Filterkammer über Kanäle, die insbesondere in den Filterplatten ausgebildet sind, der Abführleitung am Einspeisepunkt zuführbar, wobei der Abführleitung im Wesentlichen das Filtrat aller Filterkammern des gebildeten Filterpakets zuführbar ist. Das durch die Abführleitung geführte Filtrat umfasst somit die Summe aller aus den Filterkammern zugeführten Filtrate, womit die Trübung des durch die Abführleitung geführten Filtrats abhängig von den Trübungen der jeweiligen der Abführleitung zugeführten Filtrate ist. Erfindungsgemäß ist der Abführleitung das Filtrat aus den Filterkammern an einer Vielzahl an Einspeisepunkten zuführbar. Insbesondere sind die Einspeisepunkte in der Abführleitung - in einer Strömungsrichtung der Abführleitung betrachtet - aufeinanderfolgend angeordnet. Durch diese aufeinanderfolgende Anordnung der Einspeisepunkte in der Abführleitung ist sichergestellt, dass eine Änderung der Trübung des Filtrats in der Abführleitung einem entsprechend stromaufwärts angeordneten Einspeisepunkt, respektive dem über diesen Einspeisepunkt der Abführleitung zugeführten Filtrat zuordenbar ist. Die Anordnung zumindest eines Trübungserfassungsmoduls zur Erfassung der Trübe des Filtrats in der Abführleitung zwischen zwei Einspeisepunkten bringt verschiedene Vorteile mit sich. Zum einen ist die Anordnung des Trübungserfassungsmoduls in der Abführleitung vorteilhaft, da die Abführleitung - verglichen zu den Kanälen der Filterkammern - einen größeren durchströmten Querschnitt aufweist, was eine verlässliche und robuste Messung erlaubt. Bei Anordnung eines Trübungserfassungsmoduls in einem - einen vergleichsweise kleineren Querschnitte aufweisenden - Kanal zwischen der Filterkammer und der Abführleitung, ist viel eher ein Zuwachsen bzw. Verstopfen des Kanals möglich. Durch die Anordnung des Trübungserfassungsmoduls in der Abführleitung ist jedoch kein wesentlicher Einfluss des Trübungserfassungsmoduls auf die Strömung gegeben und insbesondere das Risiko einer Verstopfung oder eines Zuwachsens der Abführleitung nicht gegeben.

Vielmehr wiegt allerdings der Vorteil, dass bei Anordnung des Trübungserfassungsmoduls zwischen zwei Einspeisepunkten eine verlässliche und robuste Überwachung der Trennung der Fest-Flüssig Suspension möglich wird. So an einem ersten Einspeisepunkt der Abführleitung ein Filtrat mit einem höheren Gehalt an Feststoff und somit mit einer höheren Trübe zuströmt, wird das zwischen dem ersten Einspeisepunkt und einem stromabwärts gelegenen zweiten Einspeisepunkt angeordnete Trübungserfassungsmodul eine erhöhte Trübung feststellen. Erfindungsgemäß werden zudem auch die weiteren stromabwärts des zweiten Einspeisepunktes angeordneten Trübungserfassungsmodule eine - in Strömungsrichtung zunehmend abnehmende - erhöhte Trübung feststellen. Dieses erlaubt die erfindungsgemäße verlässliche Überwachung der Trennung der Fest-Flüssig Suspension, denn selbst bei Versagen eines einzelnen Trübungsfassungsmoduls kann der Bereich erhöhter Trübung in der Abführleitung schnell identifiziert werden, und somit die Ursache für die erhöhte Trübung schnell identifiziert werden.

Das Feststellen der erhöhten Trübung bezieht sich zum einen auf den zeitlichen Verlauf der vom Trübungserfassungsmodul gemessenen Trübung, womit die Erhöhung sich auf die sonst im zeitlichen Mittel gemessene Trübung bezieht.

Das Feststellen der erhöhten Trübung bezieht sich aber auch auf den zeitgleichen Vergleich der von verschiedenen Trübungserfassungsmodulen gemessenen Trübungen. So wird - jeweils bezogen auf das zwischen dem ersten und dem zweiten Einspeisepunkt angeordnete Trübungserfassungsmodul - ein stromaufwärts des ersten Einspeisepunkts angeordnetes Trübungserfassungsmodul eine geringere Trübung messen, wobei ein unmittelbar stromabwärts des zweiten Einspeisepunktes angeordnetes Trübungserfassungsmodul eine höhere Trübung messen wird als das stromaufwärts des ersten Einspeisepunktes angeordnete Trübungserfassungsmodul. Letzteres erlaubt unmittelbar eine Plausibilitätsbetrachtung verschiedener Trübungsmessungen.

Entsprechend dem Erfindungsgenstand kann weiter die Funktionsfähigkeit der verschiedenen in der Abführleitung angeordneten Trübungserfassungsmodule überwacht werden. So ein Trübungserfassungsmodul eine beständig, d.h. im zeitlichen Mittel - hinsichtlich der stromaufwärts bzw. stromabwärts angeordneten Trübungserfassungsmodule abweichende Trübung erfasst, so ist ein Fehlfunktion des Trübungsmoduls naheliegend, insbesondere da sämtliche Trübungserfassungsmodule das in der Abführleitung geführte Filtrat vermessen.

In einer vorteilhaften Ausgestaltung der Filterpresse sind genau jedem Einspeisepunkt der Abführleitung weniger als 6 Filterkammern, bevorzugt weniger als 3 Filterkammern und besonders bevorzugt genau eine einzige Filterkammer zugeordnet. In der besonders bevorzugten Ausgestaltung ist genau jedem Einspeisepunkt eine einzige Filterkammer zugeordnet, was bedeutet, dass genau nur das Filtrat aus jeweils einer einzigen Filterkammer über jeweils einen Einspeisepunkt der Abführleitung zuführbar ist. Ein zwischen zwei Einspeisepunkten in der Abführleitung angeordnetes Trübungserfassungsmodul zur Erfassung der Trübe des Filtrats ist wird den Einfluss des stromaufwärts angeordneten Einspeisepunktes - und somit des aus der respektiven Filterkammer zuströmenden Filtrats - überwachen. Eine direkte Überwachung der Trennung der Fest-Flüssig Suspension in der respektiven Filterkammer wird so möglich. Ebenso vorteilhaft kann jedoch sein, einem Einspeisepunkt der Abführleitung weniger als 6 Filterkammern, bevorzugt weniger als 3 Filterkammern zuzuordnen. Dies erlaubt die gleichzeitige Überwachung der Trennung der Fest-Flüssig Suspension in den weniger als 6, bzw. weniger als 3, Filterkammern über im Wesentlichen das eine Trübungserfassungsmodul, das dem einen Einspeisepunkt stromabwärts in der Abführleitung folgt. Dies erlaubt eine bündelweise Überwachung von Filterkammern, bzw. trotz einer verringerten Anzahl von Trübungserfassungsmodulen kann eine fehlerhafte Trennung der Fest-Flüssig Suspension auf eine beschränkte Anzahl von Entwässerungskammern eingegrenzt werden.

Vorteilhafterweise umfasst die Filterpresse ein Trübungserfassungsmodul, wobei das Trübungserfassungsmodul einen elektromagnetischen Emitter und einen elektromagnetischen Detektor umfasst. Insbesondere ist der Detektor zum Empfang der vom Emitter abgegebenen elektromagnetischen Strahlung ausgebildet, sowie der Detektor insbesondere zur Bestimmung der Menge der empfangenen elektromagnetischen Strahlung ausgebildet. Elektromagnetische Emitter und korrespondierende elektromagnetische Detektoren sind robust und besonders gut zur Erfassung der Trübe eines Filtrats geeignet. Besonders bevorzugt ist der elektromagnetische Emitter als optischer Emitter und der elektromagnetische Detektor als optischer Detektor, insbesondere als Photodiode, ausgebildet. Optische Emitter bzw. optische Detektoren sind gut verfügbar, kostengünstig und erlauben ebenso eine gute Erfassung der Trübe des Filtrats.

In einer bevorzugten Ausführungsform ist das Trübungserfassungsmodul an einer Außenseite der Filterplatte angeordnet, und der elektromagnetische Emitter und der elektromagnetische Detektor sind über eine Bohrung in der Filterplatte von außen in die Abführleitung einbringbar. Entsprechend der guten Zugänglichkeit kann - bei Bedarf - das Trübungserfassungsmodul einfach getauscht bzw. gewartet werden.

In einer besonders vorteilhaften Anordnung ist eine Vielzahl von Trübungserfassungsmodulen in der Abführleitung angeordnet. So sind beispielsweise mehr als 3, bevorzugt mehr als 5 und besonders bevorzugt mehr als 10 Trübungserfassungsmodule in der Abführleitung angeordnet. Insbesondere sind die Trübungserfassungsmodule zwischen Einspeisepunkten angeordnet. Dabei erlaubt eine höhere Anzahl von Trübungserfassungsmodulen eine leichtere Zuordnung bzw.

Eingrenzung einer fehlerhaften Trennung der Fest-Flüssig Suspension auf als Verursacher in Frage kommende Entwässerungskammern. Besonders bevorzugt ist nach spätestens jedem 10ten, bevorzugt nach spätestes jedem 6ten, und besonders bevorzugt nach spätestens jedem 3ten Einspeisepunkt ein Trübungserfassungsmodul zwischen zwei Einspeisepunkten angeordnet, wobei durch entsprechend systematische Anordnung der Trübungserfassungsmodule, d.h. nach spätestens jedem 10ten, bevorzugt nach spätestes jedem 6ten, und besonders bevorzugt nach spätestens jedem 3ten Einspeisepunkt, bereits mit einer die Anzahl der Entwässerungskammern unterschreitenden Anzahl an Trübungserfassungsmodulen eine systematische und effektive Eingrenzung einer fehlerhaften Trennung der Fest-Flüssig Suspension möglich ist.

In einer weiteren vorteilhaften Anordnung wird die Abführleitung durch in den Filterplatten angeordnete Abführleitungs-Segmente gebildet, wobei durch die Stapelung der Filterplatten die Abführleitungs-Segmente die Abführleitung ausbilden. Dies erlaubt eine einfache Ausbildung der Abführleitung, wobei insbesondere beim Öffnen des Filterpakets und der Trennung der benachbarten Filterplatten die einzelnen Abführleitungs-Segmente gut zugänglich und insbesondere gut zu reinigen sind. Die erfindungsgemäße Anordnung des zumindest einen Trübungserfassungsmoduls in der Abführleitung - bzw. in den Abführleitungssegmenten - hat insbesondere auch konstruktive Vorteile, da im Bereich des Abführleitungs-Segments ein Trübungserfassungsmodul konstruktiv einfach in eine Filterplatte implementiert werden kann, wobei insbesondere die Filterplatten typischerweise im Bereich um das Abführleitungs-Segment volle Querschnitte und somit eine hohe Festigkeit aufweisen, womit eine Implementierung eines Trübungserfassungsmodul nur eine vernachlässigbare mechanische Schwächung der Filterplatte verursacht.

In einer ebenso vorteilhaften Ausgestaltung der Filterpresse ist das Filtermittel als Gewebe oder Membran, insbesondere Druckmembran, ausgebildet. Dies erlaubt eine besonders effektive Abscheidung des Feststoffes aus der Fest-Flüssig Suspension.

Die Erfindung betrifft auch ein Verfahren zur Überwachung der Trennung einer Fest-Flüssig Suspension in einer erfindungsgemäßen Filterpresse, wobei den Filtermittel umfassenden Filterkammern der Filterpresse die Fest-Flüssig Suspension über die Zuführleitung zugeführt wird, in den Kammern der Feststoff der Fest-Flüssig Suspension an den jeweiligen Filtermitteln zurückgehalten wird, und der Abführleitung an Einspeisepunkten das Filtrat aus den jeweiligen Filterkammern zugeführt wird. Erfindungsgemäß wird in der Abführleitung zwischen zwei Einspeisepunkten die Trübung des Filtrats über das zumindest eine Trübungserfassungsmodul erfasst. Dies erlaubt eine verlässliche und robuste Messung, ohne wesentliche Beeinflussung der Strömung in der Abführleitung und ohne Risiko einer Verstopfung oder eines Zuwachsens der Abführleitung.

Insbesondere erlaubt das erfindungsgemäße Verfahren eine Plausibilitätsbetrachtung zur Funktionsweise einzelner Trübungserfassungsmodule.

In einer vorteilhaften Ausgestaltung des Verfahrens wird ein Alarm ausgegeben bei Messung einer - einen Schwellenwert überschreitenden - Trübung des Filtrats an zumindest einem Trübungserfassungsmodul. Beispielsweise wird dazu die Trübung des Filtrats im zeitlichen Verlauf verfolgt und ein zeitlicher Mittelwert und die Standardabweichung bestimmt. So im zeitlichen Verlauf eine vom Trübungserfassungsmodul gemessene Trübung den Schwellenwert überschreitet - beispielsweise außerhalb der 1-sigma Schwankungsbreite, bevorzugt außerhalb der 3-sigma Standardabweichung, zu liegen kommt - wird ein Alam ausgegeben und auf eine fehlerhafte Trennung der Fest-Flüssig Suspension der entsprechenden Filterkammer aufmerksam gemacht.

In einer weiteren vorteilhaften Ausgestaltung des Verfahrens wird ein Alarm ausgegeben, wenn die von einem ersten Trübungserfassungsmodul gemessene Trübung eine einen Schwellenwert überschreitende Abweichung zu den gemessenen Trübungen von stromaufwärts und / oder stromabwärts angeordneten Trübungserfassungsmodulen aufweist. Im Regelbetrieb, d.h. ohne fehlerhafte Trennung der Fest-Flüssig Suspension, vermessen alle Trübungserfassungsmodule ein - im Wesentlichen von Feststoff freies - Filtrat, womit alle Trübungserfassungsmodule im Wesentlichen eine vergleichbare Trübung ermitteln sollten, insbesondere wenn die Trübungen im zeitlichen Mittel bestimmt werden. So in diesem Regelbetrieb hinsichtlich der gemessenen Trübe ein Trübungserfassungsmodul eine einen Schwellenwert überscheitende Abweichung gegenüber stromaufwärts und/oder stromabwärts angeordnete Trübungserfassungsmodule aufweist, wird ein Alarm ausgegeben. Entsprechend dem unplausiblen Verhalten des betroffenen Trübungserfassungsmodul kann eine Überprüfung eingeleitet werden.

Die Erfindung wird nun anhand der Zeichnungen beispielhaft beschrieben.
Fig. 1 zeigt ein aus Filterplatten gebildetes Filterpaket für eine Filterpresse entsprechend dem Stand der Technik.
Fig. 2 zeigt eine Filterplatte einer erfindungsgemäßen Filterpresse.
Fig. 3 zeigt ein Detail der erfindungsgemäßen Filterplatte aus Fig. 2.

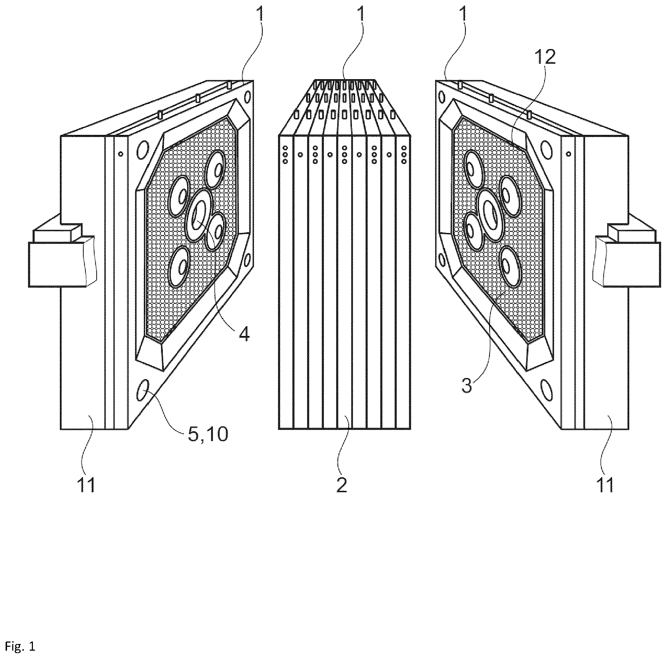

Fig. 1 zeigt exemplarisch ein Filterpaket 2 für eine Filterpresse zur Trennung einer Fest-Flüssig Suspension. Das Filterpaket 2 ist aus den einzelnen Filterplatten 1 durch Stapelung gebildet, wobei in Fig. 1 die jeweils äußersten Filterplatten 1 von dem restlichen Filterpaket 2 getrennt dargestellt sind. Angrenzend an die jeweils äußersten Filterplatten 1 sind zudem die Deckel 11 zur Pressung des Filterpakets 2 dargestellt. Zwischen benachbarten Filterplatten 1 des Filterpakets 2 sind Filterkammern 3 ausgebildet, wobei den Filterkammern 3 die Fest-Flüssig Suspension über die Zuführleitung 4 zuführbar ist. Die Zuführleitung ist durch in den Filterplatten 1 angeordnete Zuführleitungs-Segmente gebildet, wobei durch die Stapelung der Filterplatten die Zuführleitungs-Segmente die Zuführleitung 4 ausbilden. Zur Abtrennung eines Filtrats aus der Fest-Flüssig Suspension sind in den jeweiligen Filterkammern 3 Filtermittel anordenbar. Typischerweise ist auf jeder Seite der Filterplatte 1 ein Filtermittel angeordnet, womit jede Filterkammer 3 zwei Filtermittel umfasst. Das Filtermittel ist durchlässig für das Filtrat und erlaubt im Wesentlichen den Feststoff aus der Fest-Flüssig Suspension abzuscheiden, wobei der Feststoff als Feststoff-Kuchen auf dem Filtermittel zurückgehalten wird. Das Filtrat der jeweiligen Filterkammer 3 ist der Abführleitung 5 an einem Einspeisepunkt 6 zuführbar. In Fig. 1 ist die Abführleitung 5 beispielsweise durch in den Filterplatten 1 angeordnete Abführleitungs-Segmente 10 gebildet, wobei durch die Stapelung der Filterplatten die Abführleitungs-Segmente die Abführleitung 5 ausbilden. Dabei ist der Abführleitung 5 im Wesentlichen das Filtrat aller Filterkammern 3 des Filterpakets 2 zuführbar, wobei die Abführleitung 5 eine Vielzahl an Einspeisepunkten 6 aufweist.

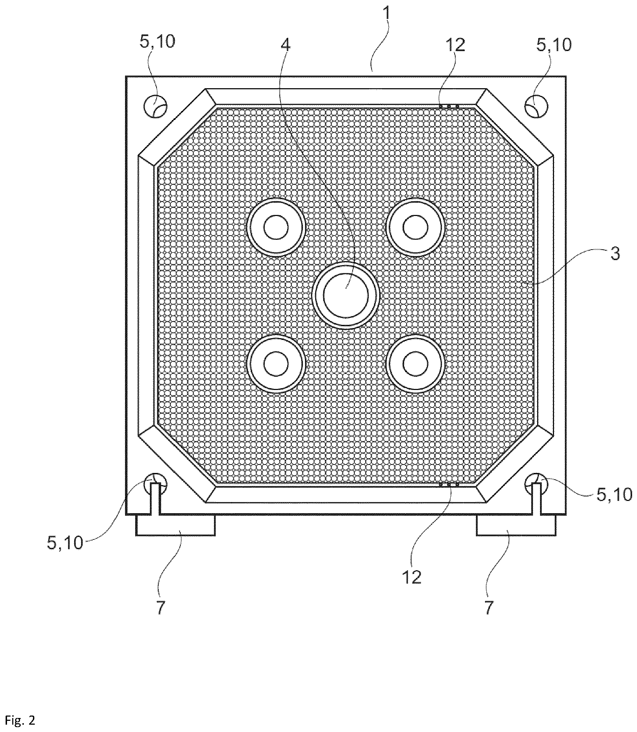

Fig. 2 zeigt eine Filterplatte einer erfindungsgemäßen Filterpresse. Die Fest-Flüssig Suspension ist der durch zwei benachbarte Filterplatten 1 gebildeten Filterkammer 3 über die Zuführleitung 4 zuführbar. Das in der jeweiligen Filterkammer 3 abgeschiedene Filtrat ist in Folge durch - über Filtratöffnungen 12 mit der Filterkammer 3 verbundene - Kanäle 13 (nicht dargestellt) der Abführleitung 5, bzw. dem über die Filterplatte 1 ausgebildeten Abführleitungs-Segment, zuführbar. Dabei wird das Filtrat der Abführleitung 5 am jeweiligen Einspeisepunkt 6 der Abführleitung zugeführt, wobei der Abführleitung 5 im Wesentlichen das Filtrat aller Filterkammern 3 zuführbar ist, und die Abführleitung 5 eine Vielzahl an Einspeisepunkten 6 aufweist. In Fig. 2 sind beispielsweise vier Abführleitungen bzw. Abführleitungs-Segmente dargestellt. In Fig. 2 sind weiter beispielsweise zwei Trübungserfassungsmodule 7 zur Erfassung der Trübe des Filtrats in zwei der Abführleitungen 5 dargestellt. Entsprechend der Ausbildung des Filterpakets 2 durch Stapelung einer Vielzahl an Filterplatten, ist beispielsweise bei Anordnung der in Fig. 2 dargestellten erfindungsgemäßen Filterplatte zwischen zwei weiteren Filterplatten die erfindungsgemäße Anordnung gegeben, wobei das zumindest eine Trübungserfassungsmodul 7 der in Fig. 2 dargestellten Filterplatte 1 in der Abführleitung 5 zwischen den Einspeisepunkten 6 der zwei weiteren Filterplatten angeordnet ist. Das Trübungserfassungsmodul 7 umfasst bevorzugt einen optischen Emitter 8 und einen korrespondierenden Detektor 9, der zur Bestimmung der Menge an - vom Emitter 8 empfangener - Strahlung ausgebildet ist. Bevorzugt ist das Trübungserfassungsmodul 7 an der Außenseite der Filterplatte 1 angeordnet, wobei der Emitter 8 und der Detektor 9 über eine Bohrung in der Filterplatte von außen in die Abführleitung 5 einbringbar sind.

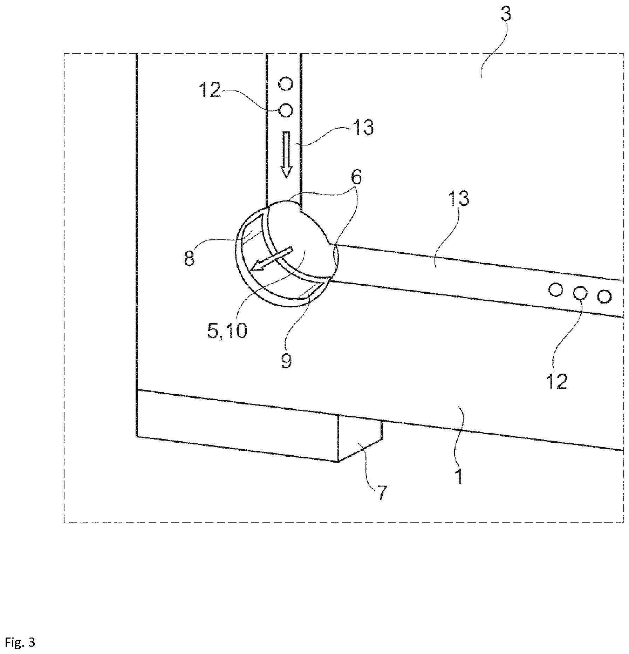

Fig. 3 zeigt ein Detail der erfindungsgemäßen Filterplatte aus Fig. 2. Dabei ist der Eckbereich der Filterplatte 1 weiter dargestellt. Insbesondere sind die Filtratöffnungen 12 dargestellt, welche die Filterkammer 3 mit den Kanälen 13 verbinden. Das Filtrat ist aus den Kanälen 13 am jeweiligen Einspeisepunkt 6 der Abführleitung 5, bzw. dem über die Filterplatte 1 ausgebildeten Abführleitungs-Segment 10, zuführbar. In Fig. 3 ist das Trübungserfassungsmodul 7 an der Außenseite der Filterplatte 1 angeordnet, wobei der Emitter 8 und der Detektor 9 über eine Bohrung in der Filterplatte von außen in die Abführleitung 5 einbringbar sind. Der Detektor 9 ist zum Empfang der vom Emitter 8 abgegebenen elektromagnetischen Strahlung ausgebildet. Weiter ist der Detektor 9 insbesondere zur Bestimmung der Menge der empfangenen elektromagnetischen Strahlung ausgebildet.

Die vorliegende Erfindung bietet zahlreiche Vorteile. Die Erfinder haben erkannt, dass durch Anordnung des Trübungserfassungsmoduls in der Abführleitung zwischen zwei Einspeisepunkten eine fehlerhafte Trennung der Fest-Flüssig Suspension, d.h. eine unzureichende Abtrennung des Feststoffes in Folge eines beschädigten Filtermittels, verlässlich erkannt werden kann und die Fehlerquelle direkt identifizierbar ist. Die erfindungsgemäße Anordnung erlaubt eine Beeinflussung der Strömung im Wesentlichen zu vermeiden, wie auch das Risiko einer Verstopfung oder eines Zuwachsens der Abführleitung kaum gegeben ist. Insbesondere zeichnet sich die Erfindung durch die verlässliche und robuste Überwachung der Trennung der Fest-Flüssig Suspension aus, wobei selbst bei Versagen eines einzelnen Trübungsfassungsmoduls der Bereich erhöhter Trübung in der Abführleitung schnell identifiziert werden kann. Ebenso erlaubt die Erfindung die Funktionsfähigkeit der verschiedenen in der Abführleitung angeordneten Trübungserfassungsmodule durch unmittelbaren Vergleich der Gesamtheit der Trübungserfassungsmodule zu überwachen.

### Bezugszeichen

- 1: Filterplatte
- 2: Filterpaket
- 3: Filterkammer
- 4: Zuführleitung
- 5: Abführleitung
- 6: Einspeisepunkt
- 7: Trübungserfassungsmodul
- 8: Emitter
- 9: Detektor
- 10: Abführleitungs-Segment
- 11: Deckel
- 12: Filtratöffnung
- 13: Kanäle

## Patentansprüche

1. Filterpresse zur Trennung einer Fest-Flüssig Suspension, umfassend
ein aus Filterplatten (1) gebildetes Filterpaket (2), wobei
das Filterpaket (2) durch Stapelung der Filterplatten (1) - unter Ausbildung von Filterkammern (3) zwischen benachbarten Filterplatten (1) - gebildet wird,
den Filterkammern (3) die Fest-Flüssig Suspension über eine Zuführleitung (4) zuführbar ist, wobei
in den jeweiligen Filterkammern (3) Filtermittel zur Abtrennung eines Filtrats aus der Fest-Flüssig Suspension anordenbar sind,
das Filtrat der jeweiligen Filterkammer (3) einer Abführleitung (5) an einem Einspeisepunkt (6) zuführbar ist,
der Abführleitung (5) im Wesentlichen das Filtrat aller Filterkammern (3) des gebildeten Filterpakets (2) zuführbar ist,
wobei die Abführleitung (5) eine Vielzahl an Einspeisepunkten (6) aufweist, **dadurch gekennzeichnet, dass**
zumindest ein Trübungserfassungsmodul (7) zur Erfassung der Trübe des Filtrats in der Abführleitung (5) zwischen zwei Einspeisepunkten (6) angeordnet ist.

2. Filterpresse nach Anspruch 1, wobei genau jedem Einspeisepunkt (6) der Abführleitung (5) weniger als 6 Filterkammern (3), bevorzugt weniger als 3 Filterkammern (3) und besonders bevorzugt genau eine einzige Filterkammer (3) zugeordnet ist.

3. Filterpresse nach Anspruch 1 oder 2, wobei das Trübungserfassungsmodul (7) einen elektromagnetischen Emitter (8) und einen elektromagnetischen Detektor (9) umfasst.

4. Filterpresse nach Anspruch 3, wobei der Detektor (9) zum Empfang der vom Emitter (8) abgegebenen elektromagnetischen Strahlung ausgebildet ist und der Detektor (9) insbesondere zur Bestimmung der Menge der empfangenen elektromagnetischen Strahlung ausgebildet ist.

5. Filterpresse nach Anspruch 3 oder 4, wobei der elektromagnetische Emitter (8) als optischer Emitter und der elektromagnetische Detektor (9) als optischer Detektor, insbesondere als Photodiode, ausgebildet ist.

6. Filterpresse nach einem der Ansprüche 3 bis 5, wobei das
Trübungserfassungsmodul (7) an einer Außenseite der Filterplatte (1) angeordnet ist, und der elektromagnetische Emitter (8) und der
elektromagnetische Detektor (9) über eine Bohrung in der Filterplatte (1) von außen in die Abführleitung (5) einbringbar sind.

7. Filterpresse nach einem der Ansprüche 1 bis 6, wobei eine Vielzahl von Trübungserfassungsmodulen (7) in der Abführleitung (5) angeordnet ist.

8. Filterpresse nach Anspruch 7, wobei nach spätestens jedem 10ten, bevorzugt nach spätestes jedem 6ten, und besonders bevorzugt nach spätestens jedem 3ten Einspeisepunkt (6) ein Trübungserfassungsmodul (7) zwischen zwei Einspeisepunkten (6) angeordnet ist.

9. Filterpresse nach einem der Ansprüche 1 bis 8, wobei die Abführleitung (5) durch in den Filterplatten (1) angeordnete Abführleitungs-Segmente (10) gebildet wird, wobei durch die Stapelung der Filterplatten die Abführleitungs-Segmente die Abführleitung (5) ausbilden.

10. Filterpresse nach einem der Ansprüche 1 bis 9, wobei das Filtermittel als Gewebe oder Membran, insbesondere Druckmembran, ausgebildet ist.

11. Verfahren zur Überwachung der Trennung einer Fest-Flüssig Suspension in einer Filterpresse entsprechend einem der Ansprüche 1 bis 10, wobei den Filtermittel umfassenden Filterkammern (3) der Filterpresse die Fest-Flüssig Suspension über die Zuführleitung (4) zugeführt wird, in den Filterkammern (3) der Feststoff der Fest-Flüssig Suspension an den jeweiligen Filtermitteln zurückgehalten wird, und der Abführleitung (5) an Einspeisepunkten (6) das Filtrat aus den jeweiligen Filterkammern (3) zugeführt wird, **dadurch gekennzeichnet, dass** in der Abführleitung (5) zwischen zwei Einspeisepunkten (6) die Trübung des Filtrats über das zumindest eine Trübungserfassungsmodul (7) erfasst wird.

12. Verfahren nach Anspruch 11, wobei ein Alarm ausgegeben wird bei Messung einer - einen Schwellenwert überschreitenden - Trübung des Filtrats an zumindest einem Trübungserfassungsmodul (7).

13. Verfahren nach einem der Ansprüche 11 bis 12, wobei ein Alarm ausgegeben wird, wenn die von einem ersten Trübungserfassungsmodul (7) gemessene Trübung eine - einen Schwellenwert überschreitende - Abweichung zu den gemessenen Trübungen von stromaufwärts und / oder stromabwärts angeordneten Trübungserfassungsmodulen (7) aufweist.
